# EUROPÄISCHE PATENTSCHRIFT

(11) **EP 1 194 051 B1**
(45) Veröffentlichungstag und Bekanntmachung des Hinweises auf die Patenterteilung: **01.10.2003**
(21) Anmeldenummer: 00951353.2
(22) Anmeldetag: 06.07.2000
(51) Int. Cl.: A46B 3/06, B29C 45/14

(54) **VERFAHREN UND VORRICHTUNG ZUR HERSTELLUNG VON BÜRSTEN SOWIE DANACH HERGESTELLTE BÜRSTEN**
METHOD AND DEVICE FOR PRODUCING BRUSHES AND BRUSHES PRODUCED USING THE SAME
PROCEDE ET DISPOSITIF DE PRODUCTION DE BROSSES ET BROSSES AINSI OBTENUES

(30) Priorität: 13.07.1999 DE 19932377
(43) Veröffentlichungstag der Anmeldung: 10.04.2002
(73) Patentinhaber: CORONET-WERKE GmbH, 69483 Wald-Michelbach (DE)
(72) Erfinder: WEIHRAUCH, Georg, D-69483 Wald-Michelbach (DE)
(74) Vertreter: Dipl.-Ing. Heiner Lichti Dipl.-Phys. Dr.rer.nat. Jost Lempert Dipl.-Ing. Hartmut Lasch
(86) Internationale Anmeldenummer: EP0006416
(87) Internationale Veröffentlichungsnummer: WO01003540

(56) Entgegenhaltungen:
- DE-A- 2 539 417
- DE-A- 19 738 256
- DE-C- 19 818 553
- US-A- 4 979 782
- US-A- 5 033 797

## Beschreibung

Die Erfindung betrifft ein Verfahren zur Herstellung von Bürsten mit einem Borstenträger aus Kunststoff und einem daran befestigten Borstenbesatz aus einzelnen oder zu Bündeln zusammengefaßten Kunststoff-Borsten, indem die befestigungsseitigen Enden der Borsten oder Bündel zu einer Verdickung aufgeschmolzen, Verdickungen benachbarter Bündel durch Nachformen und Verdrängen von Kunststoffmasse miteinander verbunden und die Verbindungen anschließend in das Kunststoffmaterial des Borstenträgers eingebettet werden. Ferner ist die Erfindung auf eine Vorrichtung zur Durchführung des Verfahrens sowie auf nach dem Verfahren hergestellte Bürsten gerichtet.

Die nachstehend am Beispiel von Zahnbürsten beschriebenen Besonderheiten und Probleme gelten gleichermaßen für eine Vielzahl von Hygienebürsten, aber auch für viele anderen Bürsten unterschiedlicher Verwendung, doch ist der Stand der Technik bei Zahnbürsten am weitesten fortgeschritten, weshalb hierauf besonders eingegangen wird.

In der modernen Zahnmedizin werden Zahnbürsten mit sensibler Aktion der Borsten gefordert, wobei sich der Borstenbesatz den Reinigungsflächen (Zähne und Interdentalräume) und den Massageflächen (Gingiva) so gut wie möglich anpassen sollte, um einerseits bei der Reinigung nicht nur den sphärischen Zahnoberflächen zu folgen, sondern auch die gewünschten Interdentalräume zu erfassen, andererseits bei der gewünschten Massage der Gingiva Verletzungen zu vermeiden.

Die Forderung, die zu reinigenden und massierenden Bereiche der Mundhöhle mit den Borsten zu erreichen, erfordert einerseits eine gewisse Länge der Borsten, andererseits soll die gesamte Bauhöhe (Borstenlänge zuzüglich Bauhöhe des Bürstenkopfs) gering gehalten werden, um auch bei beengten Verhältnissen in der Mundhöhle eine optimale Borstenaktion zu gewährleisten. Da für die Reinigungs- und Massagewirkung ausschließlich die Borsten maßgeblich sind und der Borstenträger hierzu nichts beiträgt, geht das Bestreben dahin, die Bauhöhe des Borstenträgers so gering wie möglich zu halten. Dem wiederum ist eine Grenze dadurch gesetzt, daß die Borsten eine ausreichende Einbettungslänge aufweisen müssen, um die notwendige Auszugsfestigkeit zu bieten. Borsten oder gar Bündel, die sich aus dem Borstenbesatz lösen, bereiten nicht nur Unannehmlichkeiten in der Mundhöhle, sondern können beim Verschlucken auch zu Gesundheitsschäden im Magen-/Darmtrakt führen. Die teilweise konträren Forderungen nach hoher Auszugsfestigkeit und geringer Bauhöhe lassen sich nur schwer erfüllen.

Heute werden Borstenwaren, insbesondere auch Zahnbürsten, noch zum weit überwiegenden Teil mit der herkömmlichen Stanztechnik hergestellt, d.h. die Bündel werden geschlauft und in vorbereiteten Löchern des Borstenträgers mittels Ankern befestigt. Diese Technik erfordert eine Bauhöhe von wenigstens 4 bis 6 mm für den Borstenträger. Die in Stanztechnik hergestellten Zahnbürsten können die heutigen Hygieneanforderungen wegen der vorhandenen Spalte im Bereich der Borstenbefestigung und der damit einhergehenden Einlagerung von Schmutz und Bakterien nur unzureichend erfüllen.

Hygienisch annähernd einwandfreie Zahnbürsten lassen sich durch Gießverfahren oder thermisch-plastische Fügeverfahren erzeugen, auf die sich das Verfahren gemäß dem Oberbegriff des Anspruchs 1 bezieht. Dabei werden die Borsten an ihren befestigungsseitigen Enden mit. Verdickungen versehen, mit denen sie entweder in die weichplastische Masse des Borstenträgers eingedrückt und eingeformt oder in einer Spritzgießform angeordnet werden, in der die Verdickungen mit der Schmelze der Borstenträgermasse umspritzt werden. Hiermit lassen sich Bauhöhen des Borstenträgers von 3,0 bis 4,5 mm verwirklichen. Die Grenze wird auch hier durch die die notwendige Auszugsfestigkeit bietende Einbettungslänge der Borsten bestimmt. Die Forderung nach einer geringen Bauhöhe des Borstenträgers kollidiert insbesondere dann mit der Forderung nach ausreichender Auszugsfestigkeit, wenn der weiteren Forderung der modernen Zahnmedizin nach flexiblem Verhalten des Borstenbesatzes Rechnung getragen werden soll. Dies setzt zunächst eine entsprechende Flexibilität des Borstenträgers selbst und damit eine bestimmte Kunststoffwahl und/oder konstruktive Maßnahmen voraus. Durch die Flexibilisierung des Borstenträgers wird aber wieder die Auszugsfestigkeit der Borsten reduziert, da die Borsten nicht mehr in einer starren Umgebung gehalten sind. Dies gilt insbesondere dann, wenn für den Borstenträger ganz oder teilweise gummielastische Materialien, wie Elastomere, eingesetzt werden.

Rein konstruktive Maßnahmen am Borstenträger bestehen beispielsweise in einer Gliederung des Borstenträgers (EP 0 577 656, WO 92/17092) in gelenkartig gestaltete Bereiche. Dies ist in der Regel aber mit einer Vergrößerung der Bauhöhe verbunden. Gleiches gilt für Zahnbürsten, bei denen die Flexibilisierung des Borstenbesatzes über elastomere Bereiche des Borstenträgers erzielt wird (WO 97/07707, WO 97/24048, WO 97/25899, WO 97/25900).

Es ist auch bereits versucht worden, die Borsten im Borstenträger nachgiebig zu lagern (DE 195 38 569 A1) oder den Borstenträger mit einem Elastomer-Material auszustatten und die Borsten mit diesem Material zu verschweißen (DE 36 28 722 A1, DE 195 30 057 A1). Ferner ist es bekannt (WO 97/20484), den Borstenträger aus einem tragenden Skelett aus einem relativ harten Kunststoffs zu bilden und das Skelett mit einem Elastomer zu verfüllen, wobei die Borsten im Material des Skeletts oder in dem Elastomer eingebettet sind. Eine Reduzierung der Bauhöhe wird auch hier nicht erreicht und ist im übrigen die Flexibilität des Borstenbesatzes auf die elastomeren Randbereiche beschränkt. Dabei ist es auch bekannt (DE 197 43 556 A1), das gespritzte Skelett nachträglich aufzutrennen und anschließend mit Elastomer zu verfüllen.

Bei starren Borstenträgern ist es bekannt (EP 0 405 204 B1, DE 197 38 256 A1), die Borstenbündel in die Bohrungen einer Halteplatte einzuführen und auf der Rückseite der Halteplatte aufzuschmelzen und die Schmelze in entsprechende Einsenkungen der Bohrungen einzuformen, so daß sämtliche Bündel rückseitig über eine Art Platte verbunden sind. Diese Platte wird dann von dem entsprechend ausgesparten eigentlichen Borstenträger abgedeckt, oder aber bildet sie zusammen mit der starren Halteplatte den Borstenträger.

Diese Ausführung genügt den heutigen Anforderungen hinsichtlich der Flexibilität von Zahnbürsten in keiner Weise.

Bei Zahnbürsten mit thermoplastisch eingefügten oder eingespritzten Borstenbündeln mit Verdickungen am befestigungsseitigen Ende ist es bekannt (EP 0 150 785 B1, EP 0 759 711 B1), die Verdickungen an jedem Bündel nachzuformen, um sie plattenförmig zu erweitern und dadurch die Scherfestigkeit in dem Borstenträger bei Einwirken von Auszugskräften zu erhöhen, oder auch die Verdickungen benachbarter Bündel zu einer zusammenhängenden Verdickung zu verformen (EP 0 197 384 B1, EP 0 326 634 A1), wobei ausschließlich festigkeitstechnische Aspekte im Vordergrund stehen.

Der Erfindung liegt die Aufgabe zugrunde, ein Verfahren zur Herstellung von Bürsten vorzuschlagen, das bei ausreichender Auszugsfestigkeit der Borsten eine Reduzierung der Bauhöhe des Bürstenkopfs gestattet. In weiterer Ausgestaltung soll eine weitgehend steuerbare Nachgiebigkeit des Borstenbesatzes ermöglicht werden.

Diese Aufgabe wird erfindungsgemäß dadurch gelöst, daß die Verdickungen mittels eines Formwerkzeugs zu einer definierten Tragstruktur aus benachbarte Verdickungen verbindenden Stegen umgeformt werden und anschließend die Tragstruktur und die sie überragenden Borsten auf einer kurzen Länge in das Kunststoffmaterial des Borstenträgers eingebettet werden.

Mit dem erfindungsgemäßen Verfahren wird die am befestigungsseitigen Ende der Borsten bzw. der Bündel aufgeschmolzene Kunststoffmasse genutzt, um eine definierte Tragstruktur zwischen den Verdickungen der Bündel bzw. Borsten zu erhalten, die die an den Borstenbündeln wirkenden Zugkräfte in den gesamten Borstenträger einleiten. Für die Auszugsfestigkeit der einzelnen oder zu Bündeln zusammengefaßten Borsten ist nicht mehr allein die Scherfestigkeit des Borstenträgermaterials im Bereich der Verdickungen maßgeblich, sondern tragen hierzu wesentlich größere Bereiche des Borstenträgers bei. Auf diese Weise kann gegebenenfalls die Einbettungslänge der Borsten, jedenfalls aber die Bauhöhe des Borstenträgers erheblich reduziert werden. Auch bei hoch flexiblen oder gummielastischen Kunststoffen für den Borstenträger lassen sich geringe Einbettungslängen verwirklichen. Während nach den bisher bekannten Verfahren hergestellte Bürsten mit eingebetteten Borsten die Auszugsfestigkeit bei einzeln stehenden Borsten bis zu 150 g und bei Bündeln bis zu 800 g erreicht werden konnten, läßt sich durch das erfindungsgemäße Verfahren die Auszugsfestigkeit bei Einzelborsten auf über 500 g und bei Bündeln auf über 2000 g erhöhen. Die bisher minimal mögliche Einbettungslänge von 0,5 mm läßt sich bis auf 0,25 mm, also um die Hälfte reduzieren.

Die für die gewünschte Auszugsfestigkeit notwendige Tragstruktur läßt sich unabhängig von dem Abstand der Bündel oder Einzelborsten innerhalb des Borstenbesatzes, wie auch unabhängig vom Bündeldurchmesser erzeugen, was mit den bekannten Verfahren bisher nicht möglich war.

In einer bevorzugten Ausführung ist vorgesehen, daß zwischen den Verdickungen und die sie verbindenden Stegen kunststofffreie Aussparungen eingeformt werden, die beim Gießen oder Spritzgießen des Borstenträgers oder bei thermoplastischen Fügeverfahren ein vollständiges Umfließen der Tragstruktur gestatten und damit für eine feste Verankerung des Borstenbesatzes sorgen.

In einer bevorzugten Variante des Verfahrens ist vorgesehen, daß die Verdickungen auf ihrer Borstenseite abgestützt und die beim Umformen aus den Verdickungen verdrängte Kunststoffmasse zur Bildung der Tragstruktur durch den Schließdruck des Formwerkzeugs gegen die Abstützung gesteuert wird.

Durch die Formkontur des Formwerkzeugs und die Steuerung des Fließdrucks läßt sich die aus den Verdickungen verdrängte Kunststoffmasse gezielt zu der gewünschten Tragstruktur verteilen und die gewünschten Querschnitte in den Stegen der Tragstruktur verwirklichen.

Eine weitere bevorzugte Variante des erfindungsgemäßen Verfahrens zeichnet sich dadurch aus, daß die beim Umformen aus den Verdickungen zur Bildung der Tragstruktur verdrängte Kunststoffmasse durch die in den Verdickungen aufgeschmolzene Länge der Borsten gesteuert wird.

Dieses Verfahren bietet sich insbesondere an, wenn der Borstenbesatz aus Bündeln unterschiedlichen Querschnittes, aus einzeln stehenden Borsten und solchen mit unterschiedlichen Abständen besteht. Diese Ungleichheiten werden durch Aufschmelzen einer mehr oder weniger großen Länge der Borsten ausgeglichen, indem die zur Verdrängung zur Verfügung stehende Masse gesteuert wird.

Bei dem erfindungsgemäßen Verfahren kann so vorgegangen werden, daß nach dem Anschmelzen der befestigungsseitigen Enden der Borsten oder Bündel die Verdickungen mit zeitlicher Verzögerung im noch plastischen Zustand zu den Verbindungen umgeformt werden. Bei diesem Verfahren sind die Umformkräfte relativ niedrig.

Stattdessen kann auch vorgesehen sein, daß nach dem Anschmelzen der befestigungsseitigen Enden der Borsten oder Bündel die Verdickungen mit zeitlicher Verzögerung im noch duktilen Zustand zu den Verbindungen umgeformt werden. Bei dieser Verfahrensvariante wird nur ein enger Verbund im Bereich der Verdickungen, gegebenenfalls ein Formschluß erzeugt. Gleichwohl läßt sich auf diese Weise die notwendige Erhöhung der Auszugsfestigkeit erreichen.

Das erfindungsgemäße Verfahren eignet sich in besonderem Maße zur Herstellung von Zahnbürsten oder Hygienebürsten, bei denen ein hochflexibler Borstenbesatz erwünscht ist. In einem solchen Fall wird so vorgegangen, daß zur Erzielung einer vorbestimmten Flexibilität des Borstenbesatzes das Trägheitsmoment des Borstenträgers in der Biegeachse des Borstenbesatzes und der Kunststoff des Borstenträgers hinsichtlich seines Elastizitätsmoduls so gewählt werden, daß die Flexibilität des Borstenträgers allein größer als die vorbestimmte Flexibilität des Borstenbesatzes ist, und daß die Anzahl der Verbindungen einzelner Borsten und/oder Bündel und deren in der Biegeachse wirksames Trägheitsmoment im Zusammenwirken mit dem Trägheitsmoment der Verdickungen zumindest lokal so gewählt werden, daß die Flexibilität des Borstenträgers auf das für den Borstenbesatz vorbestimmte Maß gedämpft wird.

Das erfindungsgemäße Verfahren geht, wie bereits angedeutet, von einem Stand der Technik aus, wie er beispielsweise in EP 0 197 384 B1 und EP 0 3266 34 A1 beschrieben ist. Im Gegensatz zu diesem Stand der Technik, der sich mit der Elastizität des Borstenbesatzes nicht näher auseinandersetzt, wird bei dem erfindungsgemäßen Verfahren dem Borstenträger eine Flexibilität (Elastizität) verliehen, die größer ist als dies für den Bedarfsfall notwendig ist. Diese Flexibilät wird durch die Auswahl des Werkstoffs, der beispielsweise ein hochelastischer Thermoplast, ein Elastomer od. dgl. sein kann, sowie dadurch vorgegeben, daß dem Borstenträger ein entsprechend niedriges Trägheitsmoment in Bezug auf die Biegeachse, die in der Regel mit der Längsachse der Zahnbürste zusammenfällt, verliehen wird. In einem solchen Borstenträger, der ein entsprechend niedriges Trägheitsmoment in Bezug auf die Biegeachse aufweist und/oder bei Benutzung eine starke Formänderung erfährt, läßt sich die notwendige Auszugsfestigkeit nicht garantieren. Dem hilft das erfindungsgemäße Vefahren dadurch ab, daß die durch Umformen der Verdickungen erhaltenen Verbindungen einzelner Borsten und/oder Bündel in ihrer Anzahl und in ihrem in der Biegeachse wirksamen Trägheitsmoment unter Berücksichtigung des Trägheitsmomentes der Verdickungen selbst so ausgelegt werden, daß die größere Flexibilität des Borstenträgers gedämpft wird, um auf diese Weise dem Borstenbesatz die vorbestimmte Flexibilität zu verleihen. Diese verfahrenstechnischen Maßnahmen können am Bürstenkopf auch nur lokal vorgesehen werden, um definierte Biegebereiche in und quer zur Längsachse des Bürstenkopfs zu erzeugen.

Da die Verbindungen im wesentlichen nur zur Erhöhung der Scherfestigkeit beitragen sollen und es infolgedessen in erster Linie auf die Scherfläche und das für die Scherung zur Verfügung stehende Volumen ankommt, können die Verdickungen im Bereich der Stege zu einem Querschnitt umgeformt werden, dessen wirksames Trägheitsmoment geringer ist als das der Verdickungen selbst. Diese Maßnahme wird noch dadurch unterstützt, daß die Borsten im allgemeinen aus einem hochwertigeren Kunststoff bestehen als der Borstenträger und somit auch die Verdickungen und Stege bzw. Gitter bessere Festigkeitseigenschaften aufweisen.

Es kann ferner vorgesehen sein, daß ein Teil der Stege hinsichtlich des Trägheitsmomentes soweit umgeformt werden, daß sie als Gelenke wirken. In diesen Bereichen kommt überwiegend, wenn nicht ausschließlich, die höhere Flexibilität des Borstenträgers zur Wirkung, so daß sich bereichsweise eine stärkere Flexibilität am Borstenbesatz zeigt.

Bei einer Variante des erfindungsgemäßen Verfahrens wird eine sämtliche Verdickungen erfassende Tragstruktur aus benachbarte Verdickungen verbindenden Stegen vorgeformt, auf die Verdickungen aufgebracht und mit diesen verbunden und werden anschließend die Tragstruktur und die Borsten auf einer kurzen Länge in das Kunststoffmaterial des Borstenträgers eingebettet.

Diese Variante empfiehlt sich insbesondere für große Bürsten, bei denen die Bauhöhe des Borstenträgers nicht im Vordergrund steht. Sie empfiehlt sich ferner dann, wenn für die Tragstruktur aus Festigkeitsgründen ein anderer Kunststoff als der des Borstenmaterials oder auch ein anderer Werkstoff, z.B. ein Textil- oder Drahtgewebe, in das der Kunstoff der Verdickungen eindringt, eingesetzt werden soll. Es können auch beide Verfahren miteinander kombiniert werden, indem ein Teil der Tragstruktur durch Verdrängen der Kunststoffmasse aus den Verdickungen erzeugt und der fehlende Teil entweder nachträglich in einem thermischen Verfahren, z.B. aufgegossen oder aufgespritzt oder als vorgeformtes Teil mit der vorhandenen Tragstruktur verbunden wird.

Die Erfindung betrifft ferner eine Vorrichtung zur Durchführung des Verfahrens. Eine solche Vorrichtung weist eine die Borsten und/oder die Bündel des gesamten Borstenbesatzes der Bürste in Kanälen aufnehmende Halterung, eine Einrichtung zum Zuführen der Borsten und/oder Bündel in die Kanäle bis in eine Position auf, in der sie mit ihren befestigungsseitigen Enden die Mündung der Kanäle überragen. Ferner weist eine solche Vorrichtung eine Einrichtung zum Aufschmelzen der befestigungsseitigen Enden und eine Formeinrichtung zum Nachformen der aufgeschmolzenen Enden auf. Solche Vorrichtungen gehören in Verbindung mit den beschriebenen bekannten Verfahren zum Stand der Technik. Eine solche Vorrichtung zeichnet sich erfindungsgemäß dadurch aus, daß die Formeinrichtung je einer Verdickung zugeordnete Formstempel zum seitlichen Verdrängen von Kunststoffmasse der Verdickungen und wenigstens eine zwischen den Formstempeln und der Schließeinheit angeordnete Formeinheit zum Umformen der verdrängten Kunststoffmasse zu den Verbindungen zwischen den Verdickungen aufweist.

Diese Formeinrichtung weist ferner vorzugsweise wenigstens eine zwischen den Formstempeln angeordnete, gegenüber den Formstempeln vorspringende und auf die Halterung aufsetzbare Schließeinheit zur Bildung kunststofffreier Zwischenräume auf.

Die Formstempel weisen eine Formfläche auf, deren Umriß zumindest dem Umriß der Verdickung an den befestigungsseitigen Enden der Borsten entspricht. Mit ihnen werden die Verdickungen umgeformt, insbesondere flachgedrückt, so daß die Kunststoffmasse in den Bereich zwischen die Borsten bzw. Bündel unter Bildung der Tragstruktur verdrängt wird. Zwischen den Formstempeln befindet sich die Schließeinheit, die unmittelbar auf die Halterung aufsetzt, um die seitliche Ausbreitung der verdrängten Masse zu begrenzen, während die Formeinheit, die die Bereiche zwischen den Formstempeln und der Schließeinheit umfaßt, das Ausformen der Stege bewirkt.

Vorzugsweise ist vorgesehen, daß wenigstens die Schließeinheit gegenüber den Formstempeln und der Formeinheit voreilend ausgebildet ist, so daß zunächst diejenigen Bereiche der Tragstruktur abgesperrt werden, in die die verdrängte Masse nicht eindringen soll.

Bei dieser Ausführungsform können die Formstempel und die Formeinheit einteilig ausgebildet sein. Stattdessen kann es auch von Vorteil sein, die Formeinheit federnd abzustützen, so daß bei eventuell schwankender verdrängter Masse ein Ausgleich erfolgt. Auch eine getrennte Steuerung der Formeinheit und der Formstempel kann von Vorteil sein.

Gemäß einem Ausführungsbeispiel kann die Formfläche der Formeinheit zumindest in vorgegebenen Bereichen gegenüber den Formflächen der Formstempel zurückspringen, so daß die Kunststoffmasse im Bereich der Verbindungen in einer im Borstenträger zurückgesetzten Ebene und damit beim Auslenken des Borstenträgers in der Druckzone liegt. Stattdessen kann die Formfläche der Formeinheit gegenüber den Formflächen der Formstempel auch vorspringen, mit der Folge, daß die Verbindungen stärker in die Zugzone des Borstenträgers verlagert werden.

Die Formstempel, die Schließeinheit und die Formeinheit können als einstufiges Formwerkzeug ausgebildet sein, so daß der gesamte Borstenbesatz mit diesem Formwerkzeug in einem Arbeitshub ausgebildet werden kann.

Die Halterung mit den die Borsten und/oder Bündel aufnehmenden kanälen dient mit Vorteil zugleich als Widerlager für das Formwerkzeug.

Die Formeinrichtung kann ferner zumindest bereichsweise mit einer Heizeinrichtung versehen sein, um das Fließen der verdrängten Kunststoffmasse zu unterstützen oder den Kunststoff der Tragstruktur zu tempern.

In bevorzugter Ausführung bildet die Halterung mit den die Borsten und/oder Bündel aufnehmenden Kanälen zugleich ein Teil einer Gießform, insbesondere einer Spritzgießform für den Borstenträger, so daß sie den Borstenträger beim Füllen der Form an der Seite des Borstenbesatzes abformt. Die Halterung dient also zugleich zur Positionierung der Borsten bzw. Bündel entsprechend ihrer Konfiguration im Borstenbesatz sowie zur Ausbildung der Verdickungen und der Haltestruktur der Borsten bzw. Bündel und schließlich als Formteil bei der Herstellung des Borstenträgers.

Zu diesem Zweck sind die Borsten und/oder Bündel in der Halterung in Richtung der Verdickungen verschiebbar und die Verdickungen in der Gießform auf die gewünschte Einbettungstiefe im Borstenträger einstellbar, wobei diese Einbettungstiefe aufgrund der erfindungsgemäßen Maßnahmen minimal sein kann, um eine minimale Bauhöhe am Borstenträger bei gleichwohl ausreichender Auszugsfestigkeit der Borsten zu verwirklichen.

Die Erfindung betrifft ferner eine nach dem vorgenannten Verfahren hergestellte Bürste, die, wie an sich bekannt, aus einem Borstenträger aus Kunststoff und einem Borstenbesatz aus einzelnen oder zu Bündeln zusammengefaßten Kunststoff-Borsten besteht, die an ihren befestigungsseitigen Enden mit aufgeschmolzenen Verdickungen versehen sind, mittels der sie in den Borstenträger eingebettet sind. Eine solche Bürste zeichnet sich erfindungsgemäß dadurch aus, daß die Borsten und/oder Bündel des gesamten Borstenbesatzes über die Verdickungen verbindende Stege aus dem Kunststoff der Borsten, die eine die Auszugsfestigkeit erhöhende Tragstruktur bilden, verbunden sind.

Die Tragstruktur kann zumindest bereichsweise eine geringere Dicke als. die der Verdickungen aufweisen und gegebenenfalls so dünn ausgebildet sein, daß bereichsweise Gelenke gebildet werden, welche eine vor allem bereichsweise Flexibilität des Bostenträgers unterstützen.

Die Auszugsfestigkeit, wie auch die Flexibilität des Borstenträgers lassen sich auch dadurch beeinflussen, daß die Stege zumindest teilweise in einer anderen Ebene liegen als die Verdickungen. Liegen die Stege beispielsweise in der neutralen Biegeachse, werden sie durch Fliehkräfte am wenigsten beansprucht; liegen sie hingegen in der Druck- oder Zugzone, wirken sie als Dämpfungsglied.

Nachstehend ist die Erfindung anhand von der in den Zeichnungen wiedergegebenen Ausführungsbeispielen beschrieben.

In der Zeichnung zeigen:
- Fig. 1: einen Ausschnitt einer Bürste;
- Fig. 2: eine Draufsicht auf den Borstenbesatz gemäß Fig. 1 ohne Borstenträger;
- Fig. 3: einen Ausschnitt aus einer Bürste mit einzeln stehenden Borsten;
- Fig. 4: eine Draufsicht auf den Borstenbesatz der Bürste gemäß Fig. 3 ohne den Borstenträger;
- Fig. 5: einen Ausschnitt einer anderen Ausführungsform einer Bürste mit Einzelborsten;
- Fig. 6: eine Draufsicht auf den Borstenbesatz ohne Bor stenträger der Ausführungsform gemäß Fig. 5;
- Fig. 7: einen vergrößerten Schnitt durch den Bürstenkopf einer Zahnbürste;
- Fig. 8: eine vergrößerte Detaildarstellung des Schnitts gemäß Fig. 6;
- Fig. 9: einen der Fig. 7 entsprechenden Schnitt in einer Ebene zwischen benachbarten Bündeln;
- Fig. 10: einen vergrößerten Ausschnitt des Schnitts gemäß Fig. 9;
- Fig. 11: eine Draufsicht auf den Borstenbesatz der Zahn bürste gemäß Fig. 7 und 9;
- Fig. 12: einen Schnitt einer Halterung für die Bündel in einer ersten Herstellungsstufe;
- Fig. 13: einen Schnitt eines Formwerkzeugs in einer zweiten Herstellungsstufe;
- Fig. 14: einen Schnitt XIV-XIV gemäß Fig. 13;
- Fig. 15: einen Schnitt XV-XV gemäß Fig. 14;
- Fig. 16: einen Schnitt XVI-XVI gemäß Fig. 14;
- Fig. 17: eine Ansicht auf die Rückseite der Tragstruktur des Borstenbesatzes, der entsprechend den Figuren 12 bis 16 hergestellt ist;
- Fig. 18: eine der Fig. 12 entsprechende Darstellung der Halterung unter Wiedergabe einer Verfahrensvariante;
- Fig. 19: die Halterung zusammen mit einem Teil des Form werkzeugs in einer weiteren Verfahrensstufe;
- Fig. 20: einen Schnitt bei geschlossenem Werkzeug in der Ebene der Bündel und
- Fig: 21: einen Schnitt des geschlossenen Werkzeugs in ei ner Ebene zwischen den Bündeln.

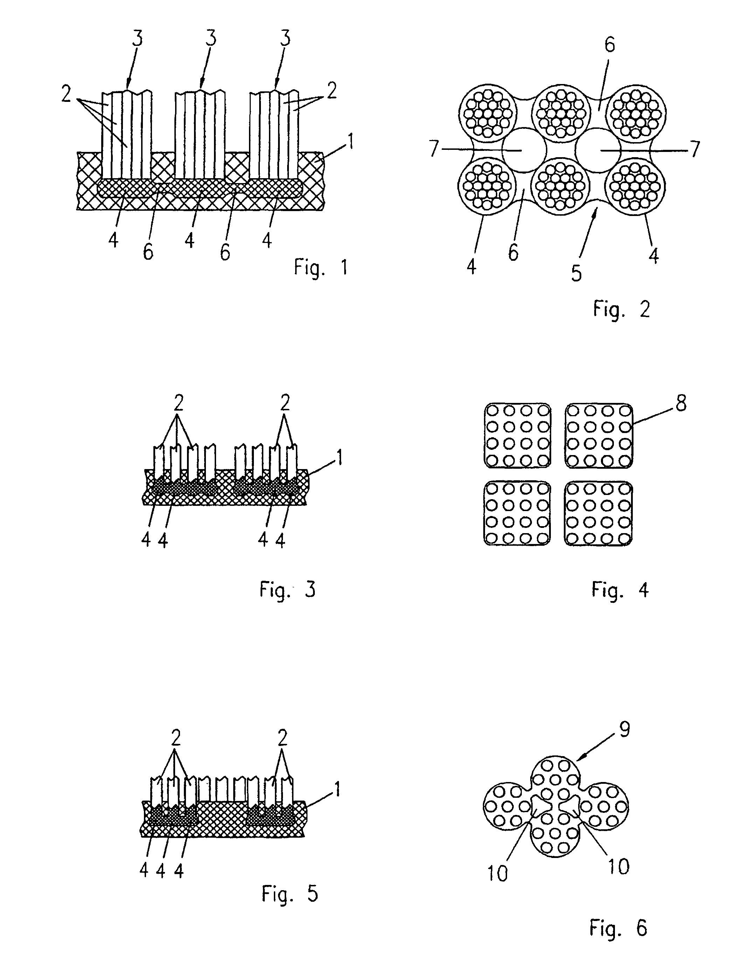

Die in den Figuren 1 bis 11 wiedergegebenen Ausführungsformen von Bürsten sind nach dem erfindungsgemäßen Verfahren hergestellt. Die Bürste gemäß Fig. 1 besteht aus einem Borstenträger 1 aus Kunststoff und zu Bündeln 3 zusammengefaßten Borsten 2, die an ihren befestigungsseitigen Enden zu Verdickungen 4 aufgeschmolzen sind. Mit diesen Verdickungen 4 sind die Bündel 3 in den Borstenträger 1 eingebettet, z.B. eingespritzt, oder in einem thermoplastischen Verfahren eingefügt. Die Verdickungen 4 der Bündel 3 sind über eine definierte Tragstruktur 5 verbunden, die beim gezeigten Ausführungsbeispiel aus benachbarte Verdickungen 4 verbindenden Stegen 6 und zwischen diesen angeordneten kunststofffreien Aussparungen 7 besteht.

Bei den Ausführungsbeispielen gemäß Figuren 3 bis 6 sind einzeln stehende Borsten 2 an ihren befestigungsseitigen Enden wiederum mit Verdickungen 4 durch Aufschmelzen der Borstenenden versehen, die durch Verdrängen von Kunststoffmasse aus den Verdickungen 4 zu einer plattenförmigen Tragstruktur 8 umgeformt sind, wobei die Einzelborsten 2 zu Gruppen zusammengefaßt sind. Bei dem Ausführungsbeispiel gemäß Figur 5 sind die Einzelborsten 2 versetzt zueinander, beispielsweise in kreisförmigen Gruppen angeordnet und sind auch hier wiederum Verdickungen 4 zu einer Tragstruktur 9 mit Aussparungen 10 umgeformt.

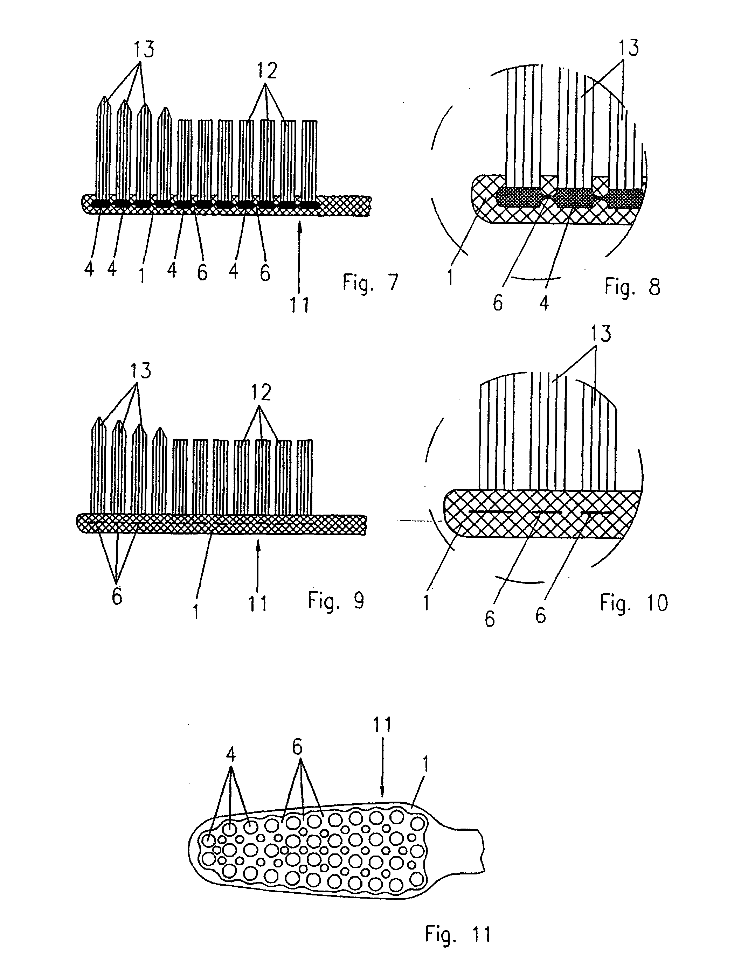

Die Figuren 7 bis 10zeigen den Kopf 11 einer Zahnbürste mit unterschiedlich langen und am nutzungsseitigen Ende unterschiedlich geformten Bündeln 12, 13, deren befestigungsseitigen Enden wiederum zu Verdickungen 4 aufgeschmolzen und durch Verdrängen der Kunststoffmasse über Stege 6 miteinander verbunden sind, die eine Tragstruktur für den gesamten Borstenbesatz aus den Bündeln 12 und 13 bilden. Die Tragstruktur und eine kurze Länge der Bündel 12, 13 sind wiederum in dem Borstenträger 1 des Bürstenkopfs 11 eingebettet. Die Stege 6 zwischen den Verdickungen können, wie Fig. 8 und 10 zeigen, sehr dünn gehalten sein und bilden dann eine Art Gelenk zwischen den einzelnen Bündeln 12, 13, tragen aber gleichwohl zur Erhöhung der Auszugsfestigkeit der Bündel 12, 13 bei.

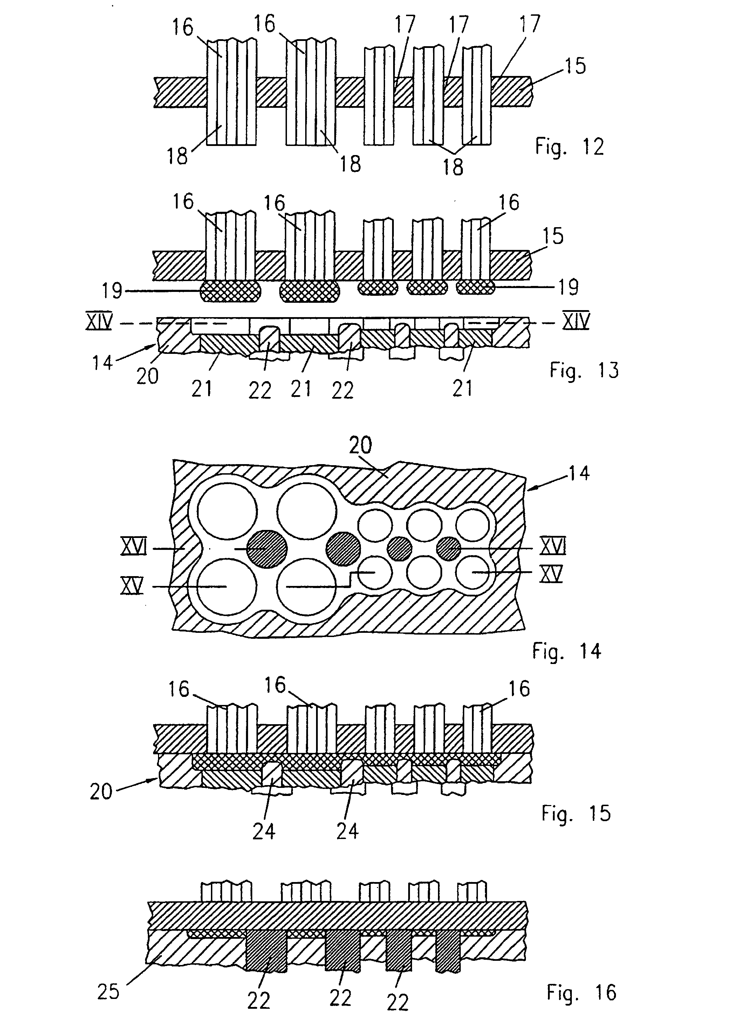

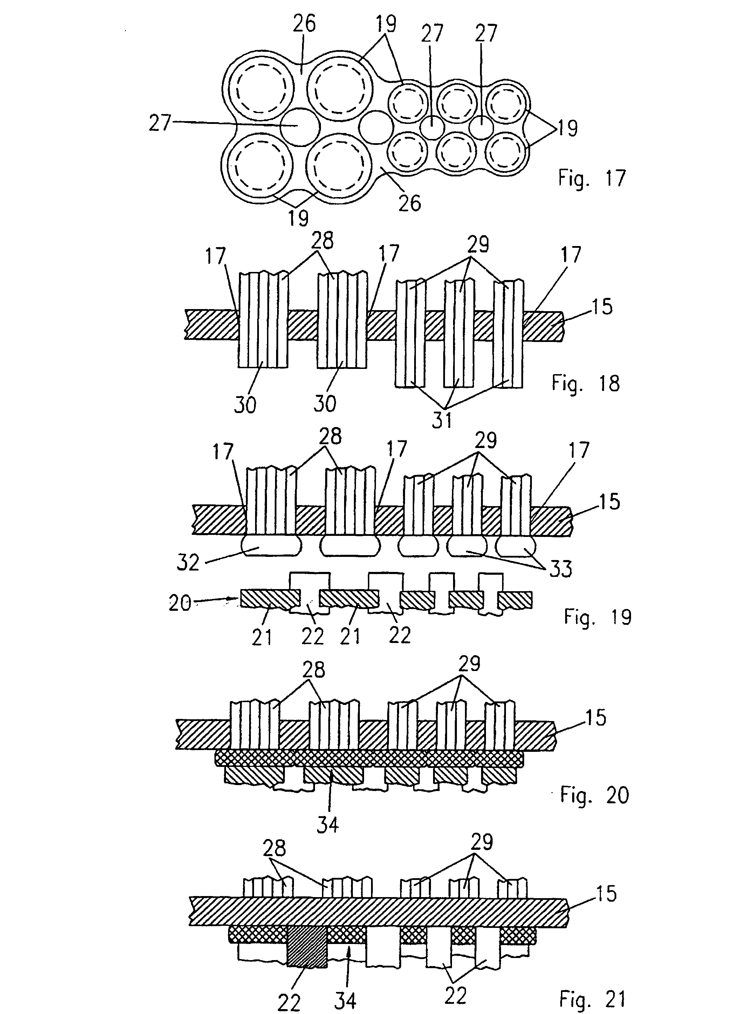

In den Fig. 12 bis 16 ist eine Vorrichtung zur Durchführung des Verfahrens bzw. zur Herstellung von Bürsten gemäß Fig. 1 bis 11 gezeigt. Fig. 12 zeigt eine Halterung 15, in der die einen Borstenbesatz bildenden Bündel 16, die gegebenenfalls unterschiedlichen Durchmesser aufweisen, in Kanälen 17 angeordnet sind. Die Bündel 16 werden mittels einer (nicht gezeigten) Zuführeinrichtung in die Kanäle 17 der Halterung 15 eingeführt und dort in geeigneter Weise, beispielsweise durch Klemmen, durch Stopfen in entsprechend enge Querschnitte der Kanäle 17 od. dgl. fixiert. Die Zuführung erfolgt derart, daß die Bündel 16 mit ihren befestigungsseitigen Enden 18 die Halterung 15 überragen. Diese befestigungsseitigen Enden 18_werden dann in bekannter Weise aufgeschmolzen, so daß sich aus der Schmelzmasse Verdickungen 19 bilden. Danach tritt eine Formeinrichtung 14 (Fig. 13 und 14) in Wirkung, die aus einzelnen, den Verdickungen zugeordneten Formstempeln 21 und einer aus einzelnen Stempeln 22 gebildeten Schließeinheit besteht, die über die Formstempel 21 vorragen und unmittelbar auf der Oberfläche der Halterung 15 zwischen den Verdickungen 19 aufsetzen. Zugleich wirken die Formstempel 21 gegen die Verdickungen 19 und verdrängen die noch weichplastische, zumindest aber duktile Kunststoffmasse zur Seite hin, wobei die verdrängte Kunststoffmasse durch die Schließstempel 22 am Weiterfließen gehindert wird. Im Raum zwischen den Formstempeln 21 und den Schließstempeln 22 können weitere Formstempel 24 oder eine komplette Formeinheit 25 angeordnet sein, die die Kunststoffmasse zu einer definierten Tragstruktur verdrängen, wie sie in Fig. 17 mit Blick auf die Rückseite der Tragstruktur gezeigt ist. Sie besteht aus den Verdickungen 19, diese verbindenden dünneren Stegen 26 und dazwischen angeordneten Aussparungen 27.

Die Steuerung bei der Verdrängung der Kunststoffmasse aus den Verdickungen 19 geschieht durch die Formkontur der Formeinrichtung 14 selbst in Verbindung mit dem Schließdruck des Formwerkzeugs 20 gegen die Halterung 15. Eine weitere Möglichkeit der Steuerung ist in den Fig. 19 bis 21 gezeigt. Hier besteht der Borstenbesatz aus Bündeln 28 und 29 unterschiedlichen Querschnitts. Diese werden mit ihrem befestigungsseitigen Ende 30 bzw. 31 unterschiedlich weit in die Kanäle 17 der Halterung 15 eingeführt. Die Borsten werden jeweils auf der die Halterung 15 überragenden Länge aufgeschmolzen, so daß unter Berücksichtigung der Abstände zwischen den Bündeln 28, 29 soviel Kunststoffmasse bereitgestellt wird, daß die Abstände durch eine gleichmäßig dikke Tragstruktur 34 überbrückt werden können. Das Formwerkzeug 20 besteht wiederum aus Formstempeln 21 und Schließstempeln 22. Die Formstempel 21 verdrängen die Masse wiederum aus den Verdickungen 32, 33 in sämtliche Formhohlräume mit Ausnahme der durch die Schließstempel 22 abgesperrten Bereiche. Auf diese Weise läßt sich die in Fig. 20 und 21 wiedergegebene Tragstruktur34 mit annähernd gleichbleibendem Querschnitt trotz unterschiedlicher Querschnitte der Bündel 28, 29 und unterschiedlicher Abstände zwischen denselben erzeugen.

## Patentansprüche

1. Verfahren zur Herstellung von Bürsten mit einem Borstenträger (1) aus Kunststoff und einem daran befestigten Borstenbesatz aus einzelnen oder zu Bündeln (3, 12, 13, 16, 28, 29) zusammen-gefaßten Kunststoff-Borsten (2), indem die befestigungsseitigen Enden der Borsten oder Bündel zu einer Verdickung aufgeschmolzen, Verdickungen (4, 19, 32, 33) benachbarter Borsten oder Bündel durch Nachformen und Verdrängen von Kunststoffmasse miteinander verbunden und die Verbindungen anschließend in das Kunststoffmaterial des Borstenträgers eingebettet werden, **dadurch gekennzeichnet, daß** die Verdickungen (4, 19, 32, 33)mittels eines Formwerkzeugs (20) zu einer definierten Tragstruktur (5, 9, 34) aus benachbarte Verdickungen (4, 19, 32, 33) verbindenden Stegen (6, 26) umgeformt werden und anschließend die Tragstruktur (5, 9, 34) und die sie überragenden Borsten (2) auf einer kurzen Länge in das Kunststoffmaterial des Borstenträgers (1) eingebettet werden.

2. Verfahren nach Anspruch 1, **dadurch gekennzeichnet, daß** zwischen den Verdickungen (4, 19, 32, 33) und den sie verbindenden Stegen (6, 26) kunststofffreie Aussparungen (7, 10, 27) eingeformt werden.

3. Verfahren nach Anspruch 1 oder 2, **dadurch gekennzeichnet, daß** die Verdickungen (4, 19, 32, 33) auf ihrer Borstenseite abgestützt werden und die beim Umformen aus den Verdickungen (4, 19, 32, 33) verdrängte Kunststoffmasse zur Bildung der Tragstruktur (5, 9, 34) durch den Schließdruck des Formwerkzeugs (20) gegen die Abstützung gesteuert wird.

4. Verfahren nach einem der Ansprüche 1 bis 3, **dadurch gekennzeichnet, daß** die beim Umformen aus den Verdikkungen (4, 19, 32, 33) zur Bildung der Tragstruktur (5, 9, 34) verdrängte Kunststoffmasse durch die zu den Verdickungen (4, 19, 32, 33) aufgeschmolzene Länge der Borsten (2) gesteuert wird.

5. Verfahren nach einem der Ansprüche 1 bis 4, **dadurch gekennzeichnet, daß** die Verdickungen (4, 19, 32, 33) von mehr als zwei Borsten (2) oder Bündeln (3, 12, 13, 16, 28, 29) zu einem sie verbindenden Gitter umgeformt wird.

6. Verfahren nach einem der Ansprüche 1 bis 5, **dadurch gekennzeichnet, daß** nach dem Anschmelzen der befestigungsseitigen Enden (18, 30, 31) der Borsten (2) oder Bündel (3, 12, 13, 16, 28, 29) die Verdickungen (4, 19, 32, 33) mit zeitlicher Verzögerung im noch plastischen Zustand zu den Verbindungen umgeformt werden.

7. Verfahren nach einem der Ansprüche 1 bis 5, **dadurch gekennzeichnet, daß** nach dem Anschmelzen der befestigungsseitigen Enden (18, 30, 31) der Borsten (2) oder Bündel (3, 12, 13, 16, 28, 29) die Verdickungen (4, 19, 32, 33) mit zeitlicher Verzögerung im noch duktilen Zustand zu den Verbindungen umgeformt werden.

8. Verfahren nach einem der Ansprüche 1 bis 7 zur Herstellung von Zahnbürsten oder Hygienebürsten, **dadurch gekennzeichnet, daß** zur Erzielung einer vorbestimmten Flexibilität des Borstenbesatzes das Trägheitsmoment des Borstenträgers (1) in der Biegeachse des Borstenbesatzes und der Kunststoff des Borstenträgers (1) hinsichtlich seines Elastizitätsmoduls so gewählt werden, daß die Flexibilität des Borstenträgers (1) allein größer als die vorbestimmte Flexibilität des Borstenbesatzes ist, und daß die Anzahl der Verbindungen einzelner Borsten (2) und/oder Bündel (3, 12, 13, 16, 28, 29) und deren in der Biegeachse wirksames Trägheitsmoment im Zusammenwirken mit dem Trägheitsmoment der Verdickungen (4, 19, 32, 33) zumindest lokal so gewählt werden, daß die Flexibilität des Borstenträgers (1) auf das für den Borstenbesatz vorbestimmte Maß gedämpft wird.

9. Verfahren nach einem der Ansprüche 1 bis 8, **dadurch gekennzeichnet, daß** die aus den Verdickungen (4, 19, 32, 33) verdrängte Kunststoffmasse im Bereich der Stege (6, 26) zu einem Querschnitt umgeformt wird, dessen wirksames Trägheitsmoment geringer ist als das der Verdickungen (4, 19, 32, 33).

10. Verfahren nach einem der Ansprüche 1 bis 9, **dadurch gekennzeichnet, daß** ein Teil der Stege (6, 26) hinsichtlich ihres Trägheitsmomentes soweit umgeformt werden, daß sie als Gelenke wirken.

11. Verfahren zur Herstellung von Bürsten mit einem Borstenträger (1) aus Kunststoff und einem daran befestigten Borstenbesatz aus einzelnen oder zu Bündeln (3, 12, 13, 16, 28, 29) zusammengefaßten Kunststoff-Borsten (2), indem die befestigungsseitigen Enden der Borsten oder Bündel zu einer Verdickung aufgeschmolzen und die Verdickungen (4, 19, 32, 33) benachbarter Borsten oder Bündel miteinander verbunden und die Verbindungen anschließend in das Kunststoffmaterial des Borstenträgers eingebettet werden, dadurch gekenn.zeichnet, daß eine sämtliche Verdickungen (4, 19, 32, 33) erfassende Tragstruktur (5, 9, 34) aus benachbarteVerdickungen (4, 19, 32, 33) verbindenden Stegen (6, 26) auf die Verdickungen (4, 19, 32, 33) aufgebracht und mit diesen verbunden wird, und daß anschließend die Tragstruktur (5, 9, 34) und die Borsten (2) auf einer kurzen Länge in das Kunststoffmaterial des Borstenträgers (1) eingebettet werden.

12. Verfahren nach einem der Ansprüche 1 bis 11, **dadurch gekennzeichnet, daß** ein Teil der Tragstruktur (5, 9, 34) nach dem Verfahren gemäß einem der Ansprüche 1 bis 10 hergestellt und der fehlende Teil nach dem Verfahren gemäß Anspruch 11 auf die vorgeformte Tragstruktur (5, 9, 34) aufgebracht wird.

13. Verfahren nach Anspruch 11 oder 12, **dadurch gekennzeichnet, daß** eine nachträglich aufgebrachte Tragstruktur (5, 9, 34) durch Spritzgießen mit den Verdikkungen (4, 19, 32, 33) bzw. der vorgeformten Tragstruktur (5, 9, 34) verbunden wird.

14. Vorrichtung zu Durchführung des Verfahrens nach einem der Ansprüche 1 bis 10 oder 12, mit einer die Borsten (2) und/oder Bündel (3, 12, 13, 16, 28, 29) des gesamten Borstenbesatzes einer Zahnbürste in Kanälen aufnehmenden Halterung (15), einer Einrichtung zum Zuführen der Borsten und/oder Bündel in die Kanäle (17) bis in eine Position, in der sie mit ihren befestigungsseitigen Enden (30, 31) die Mündung der Kanäle überragen, einer Einrichtung zum Aufschmelzen der befestigungsseitigen Enden und einer Formeinrichtung zum Nachformen der aufgeschmolzenen Enden, **dadurch gekennzeichnet, daß** die Formeinrichtung (14) je einer Verdickung (4, 19, 32, 33) zugeordnete Formstempel (21) zum seitlichen Verdrängen von Kunststoffmasse der Verdickungen (4, 19, 32, 33) und wenigstens eine zwischen den Formstempeln (21) angeordnete Formeinheit (25) zum Umformen der verdrängten Kunststoffmasse zu den Verbindungen zwischen den Verdickungen (4, 19, 32, 33) aufweist.

15. Vorrichtung nach Anspruch 14, **dadurch gekennzeichnet, daß** die Formeinrichtung (14) wenigstens eine zwischen den Formstempeln (21) angeordnete, gegenüber den Formstempeln (21) vorspringende und auf die Halterung (15) aufsetzbare Schließeinheit zur Bildung kunststofffreier Zwischenräume aufweist.

16. Vorrichtung nach Anspruch 14 oder 15, **dadurch gekennzeichnet, daß** wenigstens die Schließeinheit gegenüber den Formstempeln (21) und der Formeinheit (25) voreilend ausgebildet ist.

17. Vorrichtung nach Anspruch 16, **dadurch gekennzeichnet, daß** die Formstempel (21) und die Formeinheit (25) einteilig ausgebildet sind.

18. Vorrichtung nach einem der Ansprüche 14 bis 17, **dadurch gekennzeichnet, daß** die Formstempel (21) und die Formeinheit (25) getrennt steuerbar sind.

19. Vorrichtung nach einem der Ansprüche 14 bis 18, **dadurch gekennzeichnet, daß** die Formfläche der Formeinheit (25) zumindest in vorgegebenen Bereichen gegenüber den Formflächen der Formstempel (21) zurückspringt.

20. Vorrichtung nach Anspruch 14 oder 15, **dadurch gekennzeichnet, daß** die Schließeinheit, die Formstempel (21) und die Formeinheit (25) als einteiliges Formwerkzeug (20) ausgebildet sind.

21. Vorrichtung nach einem der Ansprüche 14 bis 20, **dadurch gekennzeichnet, daß** die Halterung (15) mit den die Borsten (2) und/oder Bündel (3, 12, 13, 16, 28, 29) aufnehmenden Kanälen (17) zugleich als Widerlager für die Formeinrichtung (14) dient.

22. Vorrichtung nach einem der Ansprüche 14 bis 21, **dadurch gekennzeichnet, daß** die Formeinrichtung (14) zumindest bereichsweise mit einer Heizeinrichtung versehen ist.

23. Vorrichtung nach einem der Ansprüche 14 bis 22, **dadurch gekennzeichnet, daß** die Halterung (15) mit den die Borsten (2) und/oder Bündel (3, 12, 13, 16, 28, 29) aufnehmenden Kanälen (17) zugleich ein Teil einer Gießform für den Borstenträger (1) bildet und beim Füllen der Form den Borstenträger (1) an der Seite des Borstenbesatz abformt.

24. Vorrichtung nach einem der Ansprüche 14 bis 23, **dadurch gekennzeichnet, daß** die Borsten (2) und/oder Bündel (3, 12, 13, 16, 28, 29) in der Halterung (15) in Richtung der Verdickungen verschiebbar und die Verdickungen (4, 19, 32, 33) in der Gießform auf die gewünschte Einbettungstiefe im Borstenträger (1) einstellbar sind.

25. Bürste, hergestellt nach dem Verfahren gemäß einem der Ansprüche 1 bis 13, bestehend aus einem Borstenträger (1) aus Kunststoff und einem Borstenbesatz aus einzelnen oder zu Bündeln (3, 12, 13, 16, 28, 29) zusammengefaßten Kunststoff-Borsten (2), die an ihren befestigungsseitigen Enden mit aufgeschmolzenen Verdickungen (4, 9, 32, 33) versehen sind, mittels der sie in den Borstenträger eingebettet sind, **dadurch gekennzeichnet, daß** die Borsten (2) und/oder Bündel (3, 12, 13, 16, 28, 29) des gesamten Borstenbesatzes über die Verdickungen (4, 9, 32, 33) verbindende Stege aus dem Kunststoff der Borsten (2), die eine die Auszugsfestigkeit der Borsten erhöhende Tragstruktur (5, 9, 34) bilden, verbunden sind.

26. Bürste nach Anspruch 25, **dadurch gekennzeichnet, daß** die Tragstruktur (5, 9, 34) zumindest bereichsweise eine geringere Dicke als die der Verdickungen (4, 19, 32, 33) aufweist.

27. Bürste nach Anspruch 25 oder 26, **dadurch gekennzeichnet, daß** die Stege (6, 26) der Tragstruktur (5, 9, 34) als Gelenke ausgebildet sind.

28. Bürste nach einem der Ansprüche 25 bis 27, **dadurch gekennzeichnet, daß** die Stege (6, 26) zumindest teilweise in einer anderen Ebene liegen als die Verdickungen (4, 19, 32, 33).

## Claims

1. Method for the manufacture of brushes with a plastic bristle carrier (1) and a bristle configuration of individual or bundlewise-combined (3, 12, 13, 16, 28, 29) plastic bristles (2) fastened thereto, in that the fastening-side ends of the bristles or bundles are melted to a thickening, thickenings (14, 19, 32, 33) of adjacent bristles or bundles are interconnected by subsequent shaping and displacement of plastics material and the connections are subsequently embedded in the plastics material of the bristle carrier, **characterized in that** the thickenings (4, 19, 32, 33) are shaped by means of a mould (20) to a clearly defined support structure (5, 9, 34) of webs (6, 26) connecting adjacent thickenings (4, 19, 32, 33) and then the support structure (5, 9, 34) and the bristles (2) projecting over the same are embedded by a short length in the plastics materials of the bristle carrier (1).

2. Method according to claim 1, **characterized in that** plastic-free recesses (7, 10, 27) are formed between the thickenings (4, 19, 32, 33) and the webs (6, 26) connecting them.

3. Method according to claim 1 or 2, **characterized in that** the thickenings (4, 19, 32, 33) are supported on their bristle side and the plastics material displaced from the thickenings (4, 19, 32, 33) during shaping for forming the support structure (5, 9, 34) is controlled by the closing pressure of the mold (20) against the support.

4. Method according to one of the claims 1 to 3, **characterized in that** the plastics material displaced from the thickenings (4, 19, 32, 33) during shaping for forming the support structure (5, 9, 34) is controlled by the length of the bristles (2) melted to the thickenings (4, 19, 32, 33).

5. Method according to one of the claims 1 to 4, **characterized in that** the thickenings (4, 19, 32, 33) of more than two bristles (2) or bundles (3, 12, 13, 16, 28, 29) are shaped to a grid connecting them.

6. Method according to one of the claims 1 to 5, **characterized in that** following the initial melting of the fastening-side ends (18, 30, 31) of the bristles (2) or bundles (3, 12, 13, 16, 28, 29) , the thickenings (4, 19, 32, 33) are shaped with a time lag and in a still plastic state to the connections.

7. Method according to one of the claims 1 to 5, **characterized in that** after the initial melting of the fastening-side ends (18, 30, 31) of the bristles (2) or bundles (3, 12, 13, 16, 28, 29), the thickenings (4, 19, 32, 33) are shaped to the connections with a time lag and in a still ductile state.

8. Method according to one of the claims 1 to 7 for the manufacture of toothbrushes or hygiene brushes, **characterized in that** for obtaining a predetermined flexibility of the bristle configuration the moment of inertia of the bristle carrier (1) in the bending axis of the bristle configuration and the plastic of the bristle carrier (1) are so selected with respect to the modulus of elasticity thereof that the flexibility of the bristle carrier (1) alone is greater than the predetermined flexibility of the bristle configuration, and that the number of connections of individual bristles (2) and/or bundles (3, 12, 13, 16, 28, 29) and their moment of inertia acting in the bending axis, in conjunction with the moment of inertia of the thickenings (4, 19, 32, 33), is at least locally selected in such a way that the flexibility of the bristle carrier (1) is damped to the amount predetermined for the bristle configuration.

9. Method according to one of the claims 1 to 8, **characterized in that** the plastics material displaced from the thickenings (4, 19, 32, 33) is shaped in the vicinity of the webs (6, 26) to a cross-section, whose effective moment of inertia is lower than that of the thickenings (4, 19, 32, 33).

10. Method according to one of the claims 1 to 9, **characterized in that**, with respect to their moment of inertia, part of the webs (6, 26) is shaped to such an extent that they act as joints.

11. Method for the manufacture of brushes with a plastic bristle carrier (1) and a bristle configuration of individual or bundlewise-combined (3, 12, 13, 16, 28, 29) plastic bristles (2), fastened thereto, in that the fastening-side ends of the bristles or bundles are melted to a thickening and the thickenings (4, 19, 32, 33) of adjacent bristles or bundles are interconnected and the connections are subsequently embedded in the plastics material of the bristle carrier, **characterized in that** a support structure (5, 9, 34), covering all the thickenings (4, 19, 32, 33), of webs (6, 26) connecting adjacent thickenings (4, 19, 32, 33) is applied to and connected with the latter and that subsequently the support structure (5, 9, 34) and the bristles (2) are embedded over a short length in the plastics material of the bristle carrier (1).

12. Method according to one of the claims 1 to 11, **characterized in that** part of the support structure (5, 9, 34) is manufactured according to the method of one of the claims 1 to 10 and the missing part according to the method of claim 11 is applied to the pre-shaped support structure (5, 9, 34).

13. Method according to claim 11 or 12, **characterized in that** a subsequently applied support structure (5, 9, 34) is connected by injection molding to the thickenings (4, 19, 32, 33) or the pre-shaped support structure (5, 9, 34).

14. Apparatus for performing the method according to one of the claims 1 to 10 or 12, with a mounting support (15) receiving the bristles (2) and/or bundles (3, 12, 13, 16, 28, 29) of the complete bristle configuration of a toothbrush in channels (17), a device for supplying the bristles and/or bundles in the channels to a position in which their fastening-side ends (30, 31) project over the mouth of the channels, a device for melting the fastening-side ends and a shaping.device for the after-shaping of the melted ends, **characterized in that** the shaping device (14) has a male die (21) associated with each thickening (4, 19, 32, 33) for the lateral displacement of the plastics material of the thickenings (4, 19, 32, 33) and at least one shaping unit (25) located between the male dies (21) for shaping the displaced plastics material to the connections between the thickenings (4, 19, 32, 33).

15. Apparatus according to claim 14, **characterized in that** the shaping device (14) has at least one closing unit for forming plastic-free spaces positioned between and projecting with respect to the male dies (21) and which can be placed on the mounting support (15).

16. Apparatus according to claim 14 or 15, **characterized in that** at least the closing unit is in advance compared with the male dies (21) and shaping unit (25).

17. Apparatus according to claim 16, **characterized in that** the male dies (21) and shaping unit (25) are constructed in one piece.

18. Apparatus according to one of the claims 14 to 17, **characterized in that** the male dies (21) and shaping unit (25) are separately controllable.

19. Apparatus according to one of the claims 14 to 18, **characterized in that** at least in predetermined areas, the shaping face of the shaping unit (25) springs back with respect to the shaping faces of the male dies (21).

20. Apparatus according to claims 14 or 15, **characterized in that** the closing unit, male dies (21) and shaping unit (25) are constructed as a one-piece mold (20).

21. Apparatus according to one of the claims 14 to 20, **characterized in that** the mounting support (15) with the channel (17) receiving the bristles (2) and/or bundles (3, 12, 13, 16, 28, 29) simultaneously serves as an abutment for the shaping device (14).

22. Apparatus according to one of the claims 14 to 21, **characterized in that** the shaping device (14) is at least zonally provided with a heating device.

23. Apparatus according to one of the claims 14 to 22, **characterized in that** the mounting support (15) with the channels (17) receiving the bristles (2) and/or bundles (3, 12, 13, 16, 28, 29) simultaneously forms part of a mold for the bristle carrier (1) and during the filling of the mold shapes the bristle carrier (1) at the bristle configuration side.

24. Apparatus according to one of the claims 14 to 23, **characterized in that** the bristles (2) and/or bundles (3, 12, 13, 16, 28, 29) in the mounting support (15) are displaceable in the direction of the thickenings (4, 19, 32, 33), which in the mold can be adjusted to the desired embedding depth in the bristle carrier (1).

25. Brush, manufactured according to the method of one of the claims 1 to 13, comprising a plastic bristle carrier (1) and a bristle configuration of individual or bundlewise-combined (3, 12, 13, 16, 28, 29) plastic bristles (2), provided at their fastening-side ends with melted thickenings (4, 9, 32, 33), by means of which they are embedded in the bristle carrier, **characterized in that** the bristles (2) and/or bundles (3, 12, 13, 16, 28, 29) of the entire bristle configuration are connected by means of webs of the plastic of the bristles (2) connecting the thickenings (4, 9, 32, 33) and which form a support structure (5, 9, 34) increasing the resistance to extraction of the bristles.

26. Brush according to claim 25, **characterized in that** at least zonally, the support structure (5, 9, 34) has a smaller thickness than the thickenings (4, 19, 32, 33).

27. Brush according to claim 25 or 26, **characterized in that** the webs (6, 26) of the support structure (5, 9, 34) are constructed as joints.

28. Brush according to one of the claims 25 to 27, **characterized in that** the webs (6, 26), at least partly, are located in a different plane to the thickenings (4, 19, 32, 33).

## Revendications

1. Procédé de fabrication de brosses comportant un support de brosse (1) en matière synthétique et une garniture de poils fixée sur celuici formée de poils synthétiques individuels (2) ou réunis en faisceaux (3,12,13,16,28,29), dans lequel les extrémités de maintien des poils ou des faisceaux sont fondues en un épaississement et dans lequel les épaississements (4,19,32,33) de poils ou de faisceaux contigus sont reliés entre eux par postformage et déplacement d'une masse de matière synthétique et en ce que les liaisons sont consécutivement insérées dans la matière synthétique du support de brosse, **caractérisé en ce que** les épaississements (4,19,32,33) sont conformés au moyen d'un outil de formage (20) en une structure porteuse (5,9,34) déterminée consistant en des entretoises (6,26) reliant des épaississements contigus (4,19,32,33) et **en ce qu'**ensuite la structure porteuse (5,9,34) et les poils (2) en saillie sont insérés sur une courte longueur dans la matière synthétique du support de brosse (1).

2. Procédé selon la revendication 1, **caractérisé en ce que** des évidements sans matière synthétique (7, 10, 27) sont formés entre les épaississements (4,19,32,33) et les entretoises (6,26) les reliant.

3. Procédé selon la revendication 1 ou 2, **caractérisé en ce que** les épaississements (4,19,32,33) sont supportés du côté des poils et **en ce que** la masse de matière synthétique dégagée des épaississements (4,19,32,33) lors du formage pour la réalisation de la structure porteuse (5,9,34) est dirigée par la pression de fermeture de l'outil de formage (20) contre le support.

4. Procédé selon l'une quelconque des revendications 1 à 3, **caractérisé en ce que** la masse de matière synthétique dégagée des épaississements (4,19,32,33) lors du formage pour réaliser la structure porteuse (5,9,34) est fonction de la longueur sur laquelle les poils (2) sont fondus dans les épaississements (4,19,32,33).

5. Procédé selon l'une quelconque des revendications 1 à 4, **caractérisé en ce que** les épaississements (4,19,32,33) de plus de deux poils (2) ou de faisceaux (3,12,13,16,28,29) sont conformés en une grille les reliant.

6. Procédé selon l'une quelconque des revendications 1 à 5, **caractérisé en ce qu'**après fusion des extrémités de fixation (18, 30, 31) des poils (2) ou des faisceaux (3, 12, 13, 16, 28, 29), les épaississements (4,19,32,33) sont conformés après un certain délai en liaisons dans l'état encore plastique .

7. Procédé selon l'une quelconque des revendications 1 à 5, **caractérisé en ce qu'**après fusion des extrémités de fixation (18, 30, 31) des poils (2) ou des faisceaux (3,12,13,16,28,29), les épaississements (4, 19, 32, 33) sont conformés après un certain délai en liaisons dans l'état encore ductile.

8. Procédé selon l'une quelconque des revendications 1 à 7 pour la fabrication de brosses à dents ou de brosses d'hygiène, **caractérisé en ce que** pour obtenir une flexibilité prédéfinie de la garniture de poils, le moment d'inertie du support de brosse (1) dans l'axe de flexion de la garniture de poils et le module d'élasticité de la matière synthétique du support de brosse (1) sont choisis de telle façon que la flexibilité du seul support de brosse (1) est supérieure à la flexibilité prédéfinie de la garniture de poils, et **en ce que** le nombre de liaisons de poils individuels (2) et/ou de faisceaux (3, 12, 13, 16, 28, 29) et leur moment d'inertie dans l'axe de flexion en coopération avec le moment d'inertie des épaississements (4,19,32,33) est choisi au moins localement de telle façon que la flexibilité du support de brosse (1) est abaissée au niveau prédéterminé pour la garniture de poils.

9. Procédé selon l'une quelconque des revendications 1 à 8, **caractérisé en ce que** la masse de matière synthétique dégagée des épaississements (4,19,32,33) est conformée dans la zone des entretoises (6,26) en un profil dont le moment d'inertie efficace est inférieur à celui des épaississements (4,19,32,33).

10. Procédé selon l'une quelconque des revendications 1 à 9, **caractérisé en ce qu'**une partie des entretoises (6,26) sont conformées en ce qui concerne leur moment d'inertie pour qu'elles agissent à la manière d'articulations.

11. Procédé de fabrication de brosses comportant un support de brosse (1) en matière synthétique et une garniture de poils fixée sur celuici formée de poils synthétiques individuels (2) ou réunis en faisceaux (3,12,13,16,28,29), dans lequel les extrémités de maintien des poils ou des faisceaux sont fondues en un épaississement et dans lequel les épaississements (4,19,32,33) de poils ou de faisceaux contigus sont reliés entre eux par postformage et déplacement de masse synthétique et en ce que les liaisons sont consécutivement insérées dans la matière synthétique du support de brosse, **caractérisé en ce qu'**une structure porteuse (5, 9, 34) englobant l'ensemble des épaississements (4,19,32,33) consistant en des entretoises (6,26) reliant des épaississements contigus (4,19,32,33) est montée sur les épaississements (4,19,32,33) et reliée à ceux-ci, et **en ce qu'**ensuite la structure porteuse (5, 9, 34) et les poils (2) sont insérés sur une courte longueur dans la matière synthétique du support de brosse (1).

12. Procédé selon l'une quelconque des revendications 1 à 11, **caractérisé en ce qu'**une partie de la structure porteuse (5,9,34) est réalisée conformément au procédé selon l'une des revendications 1 à 10, et **en ce que** la partie manquante est montée sur la structure porteuse préformée (5,9,34) conformément au procédé selon la revendication 11.

13. Procédé selon la revendication 11 ou 12, **caractérisé en ce qu'**une structure porteuse (5,9,34) montée ultérieurement est reliée par injection aux épaississements (4,19,32,33) ou à la structure porteuse préformée (5,9,34).

14. Dispositif pour mettre en oeuvre le procédé selon l'une quelconque des revendications 1 à 10 ou 12 comprenant une structure de maintien (15) recevant dans des canaux les poils (2) et/ou les faisceaux (3,12,13,16,28,29) de l'ensemble de la garniture de poils d'une brosse à dents, un dispositif d'amenée des poils et/ou des faisceaux dans les canaux (17) jusqu'à une position dans laquelle ils dépassent par leurs extrémités de maintien (30, 31) l'orifice des canaux, un dispositif de fusion des extrémités de maintien et un dispositif de formage pour la postformation des extrémités fondues, **caractérisé en ce que** le dispositif de formage (14) présente des matrices de formage (21) affectées chacune à un épaississement (4,19,32,33) pour le déplacement latéral d'une masse de matière synthétique provenant des épaississements (4,19,32,33) et au moins une unité de formage (25) disposée entre les matrices de formage (21) pour conformer la masse de matière synthétique déplacée en liaisons entre les épaississements (4,19,32,33).

15. Dispositif selon la revendication 14, **caractérisé en ce que** le dispositif de formage (14) présente au moins une unité de fermeture disposée entre les matrices de formage (21) en saillie par rapport aux matrices (21) et pouvant être montée sur la structure de maintien (15) pour constituer des espaces intermédiaires sans matière synthétique.

16. Dispositif selon la revendication 14 ou 15, **caractérisé en ce qu'**au moins l'unité de fermeture est conformée en saillie par rapport aux matrices de formage (21) et à l'unité de formage (25).

17. Dispositif selon la revendication 16, **caractérisé en ce que** les matrices de formage (21) et l'unité de formage (25) sont constituées d'une seule pièce.

18. Dispositif selon l'une quelconque des revendications 14 à 17, **caractérisé en ce que** les matrices de formage (21) et l'unité de formage (25) peuvent être commandées séparément.

19. Dispositif selon l'une quelconque des revendications 14 à 18, **caractérisé en ce que** la surface de formage de l'unité de formage (25) est en retrait par rapport aux surfaces de formage des matrices (21), du moins dans des zones prédéfinies.

20. Dispositif selon la revendication 14 ou 15, **caractérisé en ce que** l'unité de fermeture, les matrices de formage (21) et l'unité de formage (25) sont conformées en un outil de formage (20) d'une seule pièce.

21. Dispositif selon l'une quelconque des revendications 14 à 20, **caractérisé en ce que** la structure de maintien (15) présentant les canaux (17) recevant les poils (2) et/ou les faisceaux (3, 12, 13, 16, 28, 29) sert simultanément de butée au dispositif de formage (14).

22. Dispositif selon l'une quelconque des revendications 14 à 21, **caractérisé en ce que** le dispositif de formage (14) est équipé au moins dans certaines zones d'un dispositif de chauffage.

23. Dispositif selon l'une quelconque des revendications 14 à 22, **caractérisé en ce que** la structure de maintien (15) présentant les' canaux (17) recevant les poils (2) et/ou les faisceaux (3,12,13,16,28,29) constitue simultanément la partie d'un moule pour le support de brosse (1) et forme lors du remplissage du moule le support de brosse (1) sur le côté de la garniture de poils.

24. Dispositif selon l'une quelconque des revendications 14 à 23, **caractérisé en ce que** les poils (2) et/ou les faisceaux (3, 12, 13, 16, 28, 29) sont déplaçables dans la structure de maintien (15) en direction des épaississements et **en ce que** l'on peut régler dans le moule la profondeur souhaitée d'insertion dans le support de brosse (1) des épaississements (4,19,32,33).

25. Brosse fabriquée conformément au procédé selon l'une quelconque des revendications 1 à 13, consistant en un support de brosse (1) en matière synthétique et une garniture de poils en poils synthétiques individuels (2) ou rassemblés en faisceaux (3,12,13,16,28,29) munis à leurs extrémités de maintien d'épaississements réalisés par fusion (4,9,32,33) au moyen desquels ils sont insérés dans le support de brosse, **caractérisée en ce que** les poils (2) et/ou les faisceaux (3, 12, 13, 16, 28, 29) de l'ensemble de la garniture de poils sont reliés par des entretoises formées dans la matière synthétique des poils (2) reliant les épaississements (4,9,32,33), entretoises constituant une structure porteuse (5,9,34) renforçant la résistance à l'arrachement des poils.

26. Brosse selon la revendication 25, **caractérisée en ce que** la structure porteuse (5,9,34) présente au moins dans certaines zones une épaisseur inférieure à celle des épaississements (4,19,32,33).

27. Brosse selon la revendication 25 ou 26, **caractérisée en ce que** les entretoises (6,26) de la structure porteuse (5,9,34) sont conformées en articulations.

28. Brosse selon l'une quelconque des revendications 25 à 27, **caractérisée en ce que** les entretoises (6,26) sont situées au moins partiellement dans un plan différent de celui des épaississements (4,19,32,33).
